# EUROPÄISCHE PATENTSCHRIFT

(11) **EP 2 212 191 B1**
(45) Veröffentlichungstag und Bekanntmachung des Hinweises auf die Patenterteilung: **02.11.2011**
(21) Anmeldenummer: 08849841.5
(22) Anmeldetag: 13.11.2008
(51) Int. Cl.: B64C 1/06, B64C 1/12, F16B 5/06

(54) **Anordnung von zwei Rumpfzellenhäuten eines Flugzeugs und einer Verbindungsstruktur zur Verbindung der Rumpfzellenhäuten**
Fuselage sections and coupling element interconnecting them
Sections de fuselage et élément d'accouplement reliant les deux sections

(30) Priorität: 13.11.2007 US 987497 P; 13.11.2007 DE 102007054053
(43) Veröffentlichungstag der Anmeldung: 04.08.2010
(73) Patentinhaber: Airbus Operations GmbH, 21129 Hamburg (DE)
(72) Erfinder: TACKE, Stefan, 21614 Buxtehude (DE); ROMING, Thorsten, 21709 Himmelpforten (DE); EDELMANN, Klaus, 28199 Bremen (DE)
(74) Vertreter: Schatt, Markus F.
(86) Internationale Anmeldenummer: PCT/EP2008/009595
(87) Internationale Veröffentlichungsnummer: WO 2009/062712

(56) Entgegenhaltungen:
- EP-A- 0 048 191
- EP-A- 1 127 785
- WO-A-2004/018183
- GB-A- 2 074 117
- US-A- 3 600 016
- US-A- 6 073 405

## Beschreibung

Die Erfindung betrifft eine Anordnung von zwei Rumpfzellenhäuten eines Flugzeugs und einer Verbindungsstruktur zur Verbindung der Rumpfzellenhäute.

Die Dokumente US-A-3 600 016, EP-A-0 048 191, EP-A-1 127 785 and GB-A-2 074 117 beschreiben ein Kupplungselement mit einem Fußflansch zur Anbindung von zwei zu verbindenden Längsversteifungselementen eines Flugzeugrumpfes.

Moderne Flugzeuge und insbesondere Passagierflugzeuge werden heutzutage überwiegend in Sektionsbauweise hergestellt. Hierbei wird eine Vielzahl von vorgefertigten, tonnenartigen Rumpfsektionen unter Bildung von umlaufenden Quemähten zur Bildung der kompletten Flugzeugrumpfzelle zusammen gefügt. Jede Rumpfsektion umfasst eine Vielzahl von bevorzugt gleichmäßig hintereinander angeordneten Ringspanten, die mit einer umlaufenden Rumpfzellenhaut beplankt ist. Zur weiteren Aussteifung der Rumpfsektion ist zwischen jeweils zwei Ringspanten eine Vielzahl von Längsversteifungselementen mit der Rumpfzellenhaut verbunden. Die Längsversteifungselemente, bei denen es sich in der Regel um so genannte "Stringer" bzw. Stringerprofile handelt, verlaufen im Wesentlichen jeweils parallel zu einer Längsachse der Rumpfsektion und sind innenseitig über den Umfang der Rumpfsektion gleichmäßig zueinander beabstandet angeordnet. Die jeweils parallel zueinander verlaufenden Längsversteifungselemente bzw. Stringerprofile können eine Z-förmige, eine L-förmige, eine Ω-förmige oder andere Querschnittsgeometrien aufweisen. Sowohl die Rumpfzellenhaut, als auch die Ringspanten und die Längsversteifungselemente können mit einem Aluminiumlegierungsmaterial, mit einem faserverstärkten Kunststoffmaterial wie beispielsweise einem kohlefaserverstärkten Epoxidharz oder in einer so genannten Hybrid-Bauweise auch mit einer Kombination der genannten Werkstoffe gebildet sein. Zur Verbindung von zwei Rumpfsektionen unter Bildung jeweils einer umlaufenden Quernaht ist eine Vielzahl von weiteren Bauteilen erforderlich.

Die Rumpfzellenhäute werden zunächst mit einer zumindest bereichsweise umlaufenden Querstoßlasche bevorzugt auf Stoß verbunden. Ein im Bereich der Quernaht positionierter, umlaufender Ringspant wird mit einer Vielzahl von umfangsseitig am Ringspant angeordneten Klampen, sogenannten "Cleats", mit der Querstoßlasche und mindestens einer der beiden aneinander stoßenden Rumpfzellenhäute zusammen gefügt. Auch die übrigen Ringspante außerhalb der Quemahtbereiche der Rumpfsektion können mit derartigen "Cleats" an die Rumpfzellenhaut angebunden sein. Die sich jeweils gegenüberliegenden Stringer im Bereich einer Quernaht werden mit einer Vielzahl von Stringerkupplungen verbunden. Darüber hinaus sind bei der zur Zeit angewendeten Fügetechnik zur Querstoßverbindung von zwei Rumpfsektionen eine Vielzahl von Stützelementen vorgesehen, durch die eine Abstützung des Ringspants im Quernahtbereich gegen Verkippen in Bezug zur Rumpfzellenhaut erfolgt. Alle erwähnten Bauteile müssen in Bezug zu den Strukturelementen der zu verbindenden Rumpfsektionen exakt positioniert, genauestens gebohrt und durch geeignete Verbindungselemente fest zusammen gefügt werden. Darüber hinaus sind insbesondere die Stützwinkel sowie die Stringerkupplungen für jede Querstoßverbindung zwischen zwei Rumpfsektionen in einer Stückzahl vorzuhalten und zu montieren, die in der Regel der Anzahl der in der Rumpfsektion eingebauten Stringer entspricht. Hierbei ist zusätzlich zu berücksichtigen, dass die Zahl der zur Aussteifung einer Rumpfsektion erforderlichen Stringer im Allgemeinen proportional zu ihren Querschnittsabmessungen steigt, so dass der Montageaufwand bei Rumpfzellen mit großen Querschnittsabmessungen erheblich zunimmt. Darüber hinaus müssen sämtliche Bohrlöcher aufwändigen Abdichtungs- und Korrosionsschutzprozeduren unterzogen werden.

Als Verbindungselemente kommen jeweils in Abhängigkeit von den für die zu fügenden Rumpfsektionen eingesetzten Materialarten beispielsweise Nietelemente oder Schrauben in Betracht. Alternativ können thermische Fügeverfahren Anwendung finden. Faserverstärkte Kunststoffmaterialien können hingegen alternativ auch durch Klebeverbindungen gefügt werden, so dass das Einbringen von Befestigungsbohrungen entbehrlich ist.

Aufgabe der Erfindung ist es, ein Kupplungselement für Stringer bereitzustellen, durch das die Anzahl von Kupplungselementen zur Herstellung einer Querstoßverbindung zwischen zwei zusammen zu fügenden Rumpfsektionen verringert werden kann, um den Montageaufwand bei der Montage von Rumpfsektionen zu einer kompletten Rumpfzelle für Flugzeuge zu minimieren.

Diese Aufgabe wird durch die Anordnung mit den Merkmalen des Patentanspruchs 1 gelöst. Weitere Ausführungsformen der Erfindung sind in den Unteransprüchen angegeben.

Die Verbindungsstruktur der Rumpfzellenhäute weist ein Kupplungselement mit einem Fußflansch zur Anbindung der zwei zu verbindenden Längsversteifungselemente und einem an dem Fußflansch angeordneten und zu diesem winklig verlaufenden Spantflansch zur Anbindung eines Ringspants auf. Insbesondere können die Mittelebenen des Fußflansches und des Spantflansches senkrecht zueinander verlaufen. Der Fußflansch und der Spantflansch sind insbesondere plattenförmig gebildet und können insbesondere einstückig hergestellt sein.

Dadurch, dass das Kupplungselement einen Fußflansch zur Anbindung von zwei zu verbindenden Längsversteifungselementen, insbesondere zwei Stringern, und einen hierzu winklig und insbesondere im Wesentlichen senkrecht angeordneten Spantflansch zur Anbindung eines Ringspants aufweist, ist ein separater Einbau von Stützwinkeln zur Sicherung des Ringspants gegenüber seitlichen Kippbewegungen in Relation zur Rumpfzellenhaut nicht mehr erforderlich, wodurch sich der zur Herstellung einer Guerstoßverbindung zwischen zwei Rumpfsektionen unter Schaffung einer umlaufenden Quernaht erforderliche Montageaufwand signifikant reduziert. Das Kupplungselement zur Verbindung von Stringern übernimmt in einem einzigen integralen Bauteil gleichermaßen die Funktion des Zusammenfügens der Stringer, der Anbindung der Stringer an die Rumpfzellenhaut bzw. die Querstoßlasche und einer zusätzlichen Verkippsicherung der Ringspante.

Die mechanische Verbindung der Stringer erfolgt mittels des Kupplungselements im Wesentlichen nur noch im Fußbereich der Stringer. Nach einer vorteilhaften Ausgestaltung geht eine Längsseite des Fußflansches in ein im Wesentlichen dreieckförmiges und im Wesentlichen senkrecht, d.h. 90° ± 15°, stehendes Flächenelement oder Verbindungsstück über, an das winklig und insbesondere unter einem Winkel von 90° ± 15° der Spantflansch anschließt.

In einer Ausführungsform der Erfindung ist der Fußflansch insbesondere als längliche Platte ausgebildet, und von einem Rand des Fußflansches aus erstreckt sich das ebenfalls plattenförmige Verbindungsstück. Die Mittelebenen des Fußflansches und des Verbindungsstücks verlaufen winklig und insbesondere in einem Winkel von 90° ± 15° zueinander. Insbesondere weist das Verbindungsstück zwischen dem Anschlussbereich des Verbindungsstücks und des Fußflansches und dem Anschlussbereich des Verbindungsstücks und des Spantflansches zwei freiliegende Kantenlinien auf, die jeweils von einer Kante des Fußflansches zu einer Kante des Spantflansches verläuft. Dabei verlaufen die freiliegenden Kantenlinien insbesondere winklig zueinander, wobei die freiliegenden Kantenlinien abschnittsweise geradlinig gebildet sind und deren Richtungen von dem Flußflansch ausgehend in einem spitzen Winkel aufeinander zu laufen. Eine oder beide freiliegenden Kantenlinien können auch kurvenförmig verlaufen, wobei sich die voranstehend bezeichneten Richtungen aus der Schwerpunktlinien der jeweiligen Kantenlinie ist.

Der Fußflansch, der Spantflansch und der zwischen diesen gelegene Verbindungsstück sind insbesondere plattenförmig gebildet und können insbesondere zusammen ein einstückig hergestelltes Bauteil bilden.

Diese Ausgestaltung ermöglicht eine einfache Herstellung des Kupplungselements, die beispielsweise für den Fall, dass das Kupplungselement mit einem Aluminiumlegierungs-Material gebildet ist, neben weiteren, insbesondere spanenden Bearbeitungsschritten, lediglich zwei Umformschritte zur Ausbildung des Fußflansches und des Spantflansches umfasst.

Darüber hinaus erlaubt die relativ geringe Anzahl der zueinander senkrecht stehenden Flächen des Kupplungselements die Fertigung mit einem faserverstärkten Kunststoffmaterial, wobei die Verstärkungsfasern bevorzugt kraftflussorientiert ausgerichtet sind.

Eine Weiterbildung des Kupplungselements sieht vor, dass das Flächenelement zur Ausbildung des Spantflansches im Wesentlichen mittig auf dem Fußflansch positioniert ist. Infolge dieser Anordnung ist eine statisch günstige Einleitung der aufzufangenden Kippmomente des Ringspants in den Fußflansch des Kupplungselements und damit in die Stringer sowie die darunter verlaufende Rumpfzellenhaut möglich.

Nach Maßgabe einer weiteren Fortbildung ist das Kupplungselement einstückig ausgestaltet und insbesondere einstückig hergestellt. Hierdurch wird die zur Herstellung einer Querstoßverbindung zwischen zwei Rumpfsektionen notwendige und vorzuhaltende Anzahl von Bauteilen maßgeblich reduziert und der Montageaufwand minimiert.

Eine weitere Fortbildung des Kupplungselements sieht vor, dass das Kupplungselement bereits herstellungsseitig mit einer Mehrzahl oder Vielzahl von exakt positionierten Bohrungen zur Einbringung von Verbindungselementen versehen ist. Die exakt vorpositioniert eingebrachten Bohrungen erleichtern die Ausrichtung des Kupplungselements im Bereich der Quernaht beim Zusammenfügen der Rumpfsektionen. Daneben können die Bohrungen zur Führung des Bohrwerkzeugs beim Einbringen der erforderlichen Befestigungsbohrungen in Strukturelemente der Rumpfsektionen beitragen. Bei den Strukturelementen handelt es sich unter anderem um die beiden bevorzugt auf Stoß zu verbindenden Rumpfzellenhäute, die Ringspante, die Klampen zur Anbindung der Ringspante an die Rumpfzellenhäute bzw. die Querstoßlaschen, die Querstoßlaschen selbst und die Stringer bzw. die Längsversteifungselemente. Gleichzeitig wird durch die Vorbohrungen die Menge der zu entsorgenden Späne und der Montageaufwand vermindert. Die Vielzahl von Bohrungen, die in der Form eines Bohrungsrasters innerhalb des Kupplungselements eingebracht sind, erlauben darüber hinaus eine in weiten Grenzen ortsvariable Befestigung des Kupplungselements bzw. eine räumlich flexible Anbindung der Strukturelemente an das Kupplungselement.

Nach Maßgabe einer weiteren Ausgestaltung des Kupplungselements ist vorgesehen, dass das Flächenelement einen Verlängerungsflansch, insbesondere zur seitlichen Anbindung von Stringem mit einer T-förmigen oder einer Z-förmigen Querschnittsgeometrie, aufweist, wobei der Verlängerungsflansch im Wesentlichen senkrecht auf dem Fußflansch steht. Diese Ausführungsvariante des Kupplungselements erlaubt zusätzlich zur Verbindung der Stringer untereinander im Bereich des Stringerfußes und mit der Rumpfzellenhaut bzw. den Querstoßlaschen ergänzend eine Verbindung zwischen mindestens einer im Wesentlichen senkrecht zur Rumpfzellenhaut stehenden Stringerflanke mit dem Kupplungselement, wodurch die mechanische Belastbarkeit der durch das Kupplungselement verbundenen Stringer im Bedarfsfall weiter gesteigert wird.

Die Erfindung betrifft eine Kombination aus einem Längsversteifungselement, einem Ringspant und einem Kupplungselement wie beschrieben.

In der Zeichnung zeigen:
Fig. 1 Ein Kupplungselement für Längsversteifungselemente, insbesondere Stringer, im Bereich einer Quernaht zwischen zwei zusammen zu fügenden Rumpfsektionen,
Fig. 2 eine Ausführungsvariante des Kupplungselements und
Fig. 3 eine perspektivische Ansicht der ersten Ausführungsvariante im eingebauten Zustand im Bereich einer Quernaht zwischen zwei zusammen gefügten Rumpfsektionen.

In der Zeichnung können dieselben konstruktiven Elemente jeweils die gleiche Bezugsziffer aufweisen.

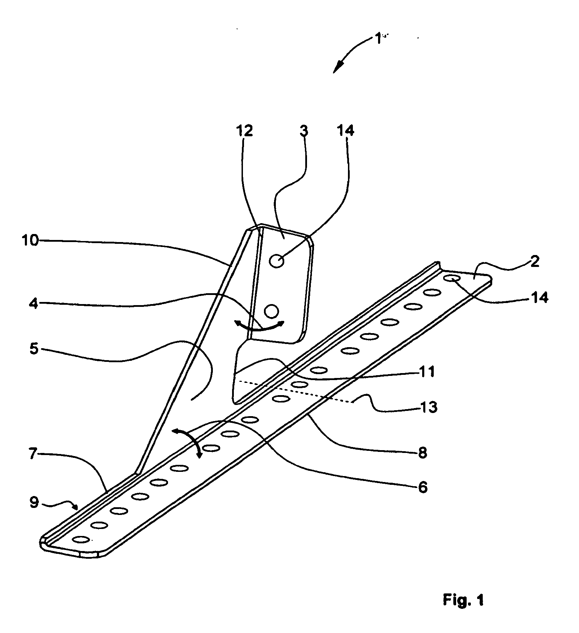

Die Fig. 1 zeigt ein Kupplungselement in einer perspektivischen Ansicht. Das einstückige Kupplungselement 1 weist auf: einen länglichen Fußflansch 2 mit vorzugsweise parallelen Längsrändern zur Anbindung eines in der Fig. 1 nicht eingezeichneten Längsversteifungselements, insbesondere eines Stringers, sowie einen Spantflansch 3 zur Anbindung eines nicht dargestellten Ringspants in einer Rumpfsektion eines Flugzeugs. Der Spantflansch 3 schließt unter einem Winkel 4 von etwa 90°, insbesondere von 90° ± 15°, an ein vorzugsweise im Wesentlichen dreieckförmiges Flächenelement 5 oder plattenförmiges Verbindungsstück an. Das Flächenelement 5 schließt wiederum unter einem Winkel 6 von ungefähr 90°, insbesondere 90° ± 15°, an den Fußflansch 2 an. Das Verbindungsstück 5 ist zwischen dem Spantflansch 3 und dem Fußflansch 2 gelegen. Der Fußflansch 2 kann insbesondere eine im Wesentlichen rechteckförmige Geometrie mit zwei parallel zu einander verlaufenden Längsrändern, d.h. Längskanten oder Längsseiten 7,8 aufweisen, wobei der Spantflansch 3 bzw. das insbesondere dreieckförmige Flächenelement 6 an der (hinteren) Längsseite 7 anschließen. An demjenigen Längsrand 7 des Fußflansches, von dem aus sich das Verbindungsstück 5 erstreckt, ist eine Aufkantung 9 zur Erhöhung der Biegesteifigkeit des Fußflansches 2 vorgesehen, von dessen Rand aus sich das Verbindungsstück 5 erstreckt. Vorzugsweise beträgt die Breite der Aufkantung weniger als 20% der Breite des Fußflansches 2. Die Aufkantung ist vorzugsweise mit einem Winkel von 90° ± 15° vorgesehen.

Das Flächenelement 5 umfasst eine in Bezug zur Richtung des Längsrandes 8 des Fußflanschens 2 geneigte, d.h. winklig verlaufende Schrägkante 10, eine in Bezug auf die Richtung des Längsrandes 7 senkrecht oder zu dieser in einem Winkel von 90° ± 15° verlaufende Hinterkante 11 sowie eine winklig und insbesondere in etwa senkrecht (90° ± 15°) zum Fußflansch 2 (zur Mittelebene desselben) verlaufende Kantlinie 12, an der der Spantflansch 3 an das Flächenelement 5 anschließt oder in dem der Spantflansch 3 in das Flächenelement 5 übergeht. Insbesondere verläuft die Richtung der Kantenlinie 10 in einem Winkel von 90° ± 15° zur Mittelebene des Fußflansches in dessen Längserstreckung. Die Kantlinie 12 verläuft ungefähr im Bereich einer den Fußflansch 2 hälftig teilenden Mittellinie 13, d.h. die Verlängerung der Kantlinie 10 trifft auf die Ebene des Fußflansches in einem Bereich von 20% der Längserstreckung des Fußflansches seitlich dessen Mittellinie in Bezug auf dessen Längserstreckung. Die beschriebene Positionierung des dreieckförmigen Flächenelements 5 bzw. des daran angeordneten Spantflansches 3 auf dem Fußflansch 2 ermöglicht eine statisch günstige Einleitung von Kippmomenten, die ausgehend vom Spantflansch 3 in das Kupplungselement 1 bzw. den Fußflansch 2 eingeleitet werden.

Sowohl der Fußflansch 2 als auch der Spantflansch 3 sind mit einer Vielzahl von Bohrungen versehen, von denen lediglich eine Bohrung 14 repräsentativ für die Übrigen mit einer Bezugsziffer versehen ist. Die Bohrungen 14 sind bevorzugt rasterförmig in den Fußflansch 2 sowie den Spantflansch 3 eingebracht, um eine örtlich variable Positionierung des Kupplungselements 1 und/oder eine flexible Anbindung weiterer Bauteile an das Kupplungselement 1 zu ermöglichen. Die Bohrungen dienen zur Durchführung in der Fig. 1 nicht dargestellter Verbindungselemente, wie beispielsweise Nieten, Schrauben oder dergleichen. Alternativ kann das Kupplungselement auch mittels thermischer Schweißverfahren mit den weiteren Komponenten der Rumpfzellenstruktur verbunden werden.

Das Kupplungselement 1 kann mit einem Aluminiumlegierungs-material, mit einer Titanlegierung, mit einer Edelstahllegierung, mit einem faserverstärkten Kunststoffmaterial, mit Glare® oder einer beliebigen Kombination der genannten Materialien gebildet sein. Bei dem Material Glare® handelt es sich um einen vielschichtigen Lagenaufbau, in dem die Lagen aus Aluminiumlegierungsmaterial jeweils durch vollflächige Klebeschichten miteinander verklebt sind. Als faserverstärkte Kunststoffmaterialien kommen bevorzugt kohlefaserverstärkte Epoxidharze in Betracht. Die Klebeschichten können beispielsweise mit einem glasfaserverstärkten Polyester- oder Epoxidharz gebildet sein.

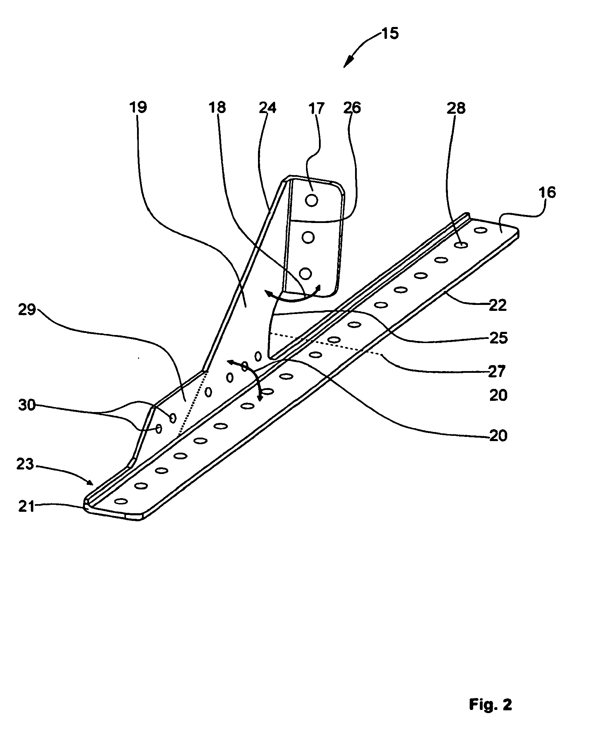

Die Fig. 2 zeigt eine Ausführungsvariante des Kupplungselements. Ein Kupplungselement 15 umfasst unter anderem einen Fußflansch 16 und einen Spantflansch 17, die jeweils plattenförmig gebildet sind. Der Spantflansch 17 schließt unter einem Winkel 18 an ein etwa dreieckförmiges Flächenelement 19 an. Zwischen dem Flächenelement 19 und dem Fußflansch 16 besteht ein Winkel 20 von 90° ± 15°, d.h. die Mittelebenen in deren Längserstreckung gesehen verlaufen in einem Winkel von 90° ± 15" zueinander. Der Fußflansch 16 weist vorzugsweise eine rechteckförmige Gestalt mit zwei parallel zueinander verlaufenden Längsseiten 21,22 und in der Figur nicht mit Bezugszeichen versehenen Querseiten auf, wobei im Bereich der in der Draufsicht der Figur 2 linken Längsseite 21 eine Aufkantung 23 vorgesehen ist. Die Aufkantung ist ein mit seiner Mittelebene winklig zur Mittelebene des übrigen Teils oder Grundkörpers des Fußflansches verlaufender Randbereich des Fußflansches, wobei der Randbereich längs eines Seitenrandes und vorzugsweise mit gleichbleibender Breite verläuft. Das Flächenelement oder das Verbindungsstück 19 weist auf: eine zwischen dem benachbarten Längsrand des Fußflansches und einem Seitenrand des Spantflansches sich freiliegend erstreckende Schrägkante 24 sowie eine vorzugsweise zur Mittelebene des Fußflansches 16 in einem Winkel von 90° ± 15° und insbesondere 90° verlaufende Hinterkante 25 sowie eine in Bezug auf die Mittelebene des Fußflansch 16, in dessen Längsrichtung gesehen, in einem Winkel von 90° ± 15" und insbesondere 90° verlaufende Kantlinie 26. Die Schrägkante 24 kann in einem Winkel von 30 bis 60° zur Mittelebene des Fußflansch 16, in dessen Längsrichtung gesehen, verlaufen. Die Kantlinie 26 bildet eine "gedachte" Trennungslinie zwischen dem Spantflansch 17 und dem Flächenelement 19, d.h. in der Kantlinie gehen der Spantflansch 17 und der Flächenelement 19, die miteinander einstückig gebildet oder hergestellt sind, über. Eine nach unten, d.h. zur Mittelebene des Fußflansches 16 hin gedachte Verlängerung der Kantlinie 26trifft in einem Bereich des Fußflansches auf, der sich in Längrichtung zu beiden Seiten der Mittellinie 27 der Längsersteckung, die den Fußflansch 16 also hälftig unterteilt, um 20% der Längserstreckung erstreckt. Infolge der gezeigten Positionierung des Flächenelements 19 auf dem Fußflansch 16 ist eine wirkungsvolle Überleitung von am Spantflansch 17 angreifenden Momenten und Kräften auf den Fußflansch 16 gegeben. Sowohl der Fußflansch 16 als auch der Spantflansch 17 sind mit einer Vielzahl von Bohrungen 28 versehen.

Im Unterschied zu der im Rahmen der Fig. 1 bereits beschriebenen Ausführungsform des Kupplungselements 1 verfügt das Kupplungselement 15 - bei ansonsten ähnlichem Aufbau - über einen Verlängerungsflansch 29 mit mehreren Bohrungen 30. Der Verlängerungsflansch 29 ist im Verbindungsbereich zwischen dem längeren freiliegenden Rand des Verbindungsstücks 19 und dem anliegenden Längsrand des Fußflansches 16 gelegen und ist einstückig hergestellt mit dem Fußflansch 16 und dem Verbindungsstück 16. Im Bereich des Flächenelements 19 und des Verlängerungsflansches 29 weist der Fußflansch 16 vorzugsweise eine im Wesentlichen L-förmige Querschnittsgeometrie auf, wohingegen die Querschnittsgeometrie des Fußflansches 16 in den übrigen Bereichen - abgesehen von der geringfügigen Aufkantung 23 - im Wesentlichen rechteckförmig ist. Der Verlängerungsflansch 29 stellt praktisch eine einseitige "Fortsetzung" des im Wesentlichen dreieckförmigen Flächenelements 19 dar. Im Fall einer zumindest bereichsweisen Verklebung des Kupplungselements 15 können die Bohrungen 18,30 zumindest teilweise entfallen.

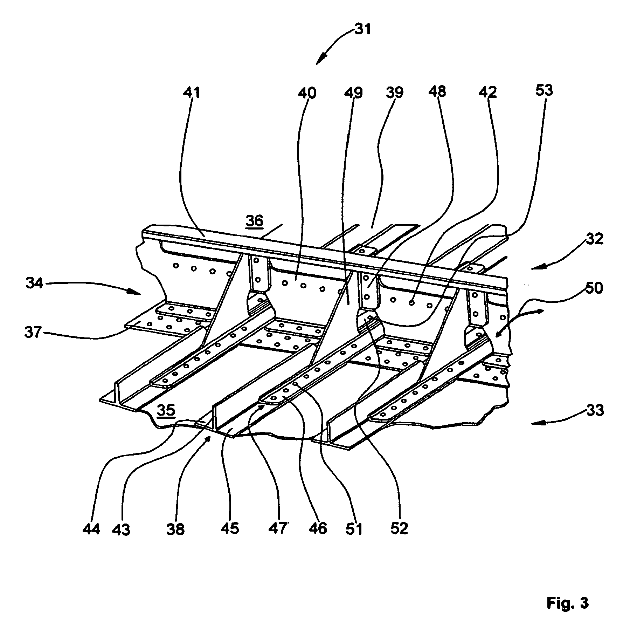

Mittels des Verlängerungsflansches 29 ist es möglich, in den Fig. 1,2 nicht dargestellte Stringerprofile als Längsversteifungselemente in Rumpfsektionen (vgl. Fig. 3) nicht nur im Bereich des Stringerfußes, sondern zusätzlich im Bereich einer im Wesentlichen senkrecht zum Stringerfuß stehenden Stringerflanke mit dem Kupplungselement 15 zu verbinden, um hierdurch die mechanische Belastbarkeit bzw. Verbindungssteifigkeit von mittels des Kupplungselements 15 zu verbindenden Stringern in einem Quemahtbereich zwischen zwei zusammen zu fügenden Rumpfsektionen zu erhöhen.

Hinsichtlich der zur Herstellung des Kupplungselements 15 einsetzbaren Materialien kann auf die im Rahmen der Beschreibung des Kupplungselements 1 weiter oben gemachten Ausführungen verwiesen werden (vgl. Fig. 1).

Die Fig. 3 zeigt ein nach Maßgabe der Darstellung der Fig. 1 ausgestaltetes Kupplungselement im eingebauten Zustand in einem Quemahtbereich zwischen zwei Rumpfsektionen einer Rumpfzellenstruktur eines Flugzeugs in einer perspektivischen Ansicht.

Eine Rumpfzellenstruktur 31 umfasst unter anderem zwei Rumpfsektionen 32,33, die im Bereich einer Quernaht 34 zusammen gefügt sind. Die Rumpfzellenhäute 35,36 der beiden Rumpfsektionen 32,33 sind mittels einer konventionellen Querstoßlasche 37 unter gleichzeitiger Schaffung der Quernaht 34 zusammen gefügt. Auf den Rumpfzellenhäuten 35,36 sind eine Vielzahl von Stringem 38,39 als Längsversteifungselemente angeordnet bzw. befestigt. Die Stringer 38,39 fluchten im Bereich der Quernaht 34, was im Übrigen auch für die weiteren Stringerpaarungen im Quernahtbereich gilt, um eine weitgehend spannungsfreie Verbindung mittels der Kupplungselemente zu gewährleisten.

Im Bereich der Quernaht 34 sind mehrere (Verbindungs-)Klampen (so genannte "Cleats"), von denen lediglich eine Klampe 40 mit einer Bezugsziffer versehen ist vorgesehen. Ein Ringspant 41 bzw. ein Ringspantsegment ist mittels einer Vielzahl von Nietelementen, von denen lediglich ein Nietelement stellvertretend für die Übrigen mit einer Bezugsziffer 42 versehen ist, über die Klampen 40 sowie die darunter verlaufende Querstoßlasche 37 mit den Rumpfzellenhäuten 35,36 verbunden.

Die Stringer 38,39 weisen jeweils eine umgekehrt T-förmige Querschnittsgeometrie auf. So weist beispielsweise der mittlere vordere Stringer 38 - repräsentativ für alle Übrigen - einen senkrechten Steg 43 auf, der an einem unteren Ende mit beidseitig anschließenden, jeweils entgegen gerichtet weisenden Fußflanschen 44,45 versehen ist.

Der rechte Fußflansch 45 des Stringers 38 ist mit einem Fußflansch 46 eines Kupplungselements 47 verbunden. Ein Spantflansch 48 des Kupplungselements 47 ist mit der Klampe 40 bzw. dem Ringspant 41 verbunden. Der konstruktive Aufbau des Kupplungselements 47 ist identisch mit dem des bereits im Rahmen der Beschreibung der Fig. 1 erläuterten konstruktiven Aufbau des Kupplungselements 1. Über ein im Wesentlichen dreieckförmiges Flächenelement 49 werden Kippmomente und Kräfte des Ringspants 41 in Richtung eines Pfeils 50 vom Spantflansch 48 mittels des Flächenelements 49 auf den Fußflansch 46 des Kupplungselements 47 übergeleitet. Die mechanische Verbindung zwischen dem Kupplungselement 47, dem rechten Fußflansch 45 des Stringers 38 und der darunter liegenden Rumpfzellenhaut 35 erfolgt bevorzugt durch Nietelemente, von denen ein Nietelement 51 repräsentativ für alle übrigen mit einer Bezugsziffer versehen ist. Auf die gleiche Weise erfolgt die Anbindung des Spantflansches 48 an die Klampe 40 bzw. den dahinter verlaufenden Ringspant 41. Sämtliche Nietelemente 42,51 bzw. Bohrungen für die Nietelement 42,51 sind bevorzugt rasterförmig angeordnet, um eine gerasterte bzw. gestufte ortsvariable Befestigung des Kupplungselements 47 in Relation zu übrigen Bauteilen der Rumpfzeltenstruktur 31 zu ermöglichen. Der linke Fußflansch 44 des vorderen Stringers 38 ist über ein einfaches, rechteckförmiges bzw. bandförmiges Kupplungselement 52 (teilweise verdeckt) mit dem hinteren Stringer 39 durch eine Vielzahl von Nietelementen 53 verbunden.

Anstelle der Nietelemente 42,51,53 können als Verbindungselemente beispielsweise Schrauben, Klemmverbindungen oder dergleichen eingesetzt werden. Alternativ ist auch zumindest eine teilweise Verklebung zumindest eines Teils der vorstehend beschriebenen, die Rumpfzellenstruktur 31 darstellenden Bauteile (Rumpfzellenhäute, Stringer, Ringspant, Klampen, Kupplungselemente) denkbar. Sämtliche Bauteile der Rumpfzellenstruktur 31 können beispielsweise mit einer Aluminiumlegierung, mit einer Titanlegierung, mit einer Edelstahllegierung, einem faserverstärkten Kunststoffmaterial oder einer beliebigen Kombination hiervon gebildet sein. Als Faser verstärkte Kunststoffe kommen insbesondere kohlefaserverstärkte Epoxidharze in Betracht.

Die alternative Ausführungsvariante des Kupplungselements 15 nach Maßgabe der Fig. 2 mit einem Verlängerungsflansch im Bereich des Flächenelements ermöglicht über eine bloße Anbindung des Stringerfußflansches hinaus auch eine mechanische Anbindung eines senkrecht stehenden Steges des Stringers bzw. einer senkrechten (Seiten-)Flanke. Diese Ausführungsvariante ist daher insbesondere im Fall der statischen Erforderlichkeit für Stringer mit einer umgekehrt T-förmigen oder Z-förmigen Querschnittsgeometrie vorgesehen (so genannter "Stringer-Web-Anschluss").

Durch die Kupplungselemente 1,15,47 zur Verbindung von Stringem wird in einem integralen Bauteil gleichzeitig die Funktion des Zusammenfügens der Stringer, der Anbindung der Stringer an die Rumpfzellenhaut bzw. an die Querstoßlasche und der Kippsicherung des Ringspants im Bereich der Querstoßlasche zwischen den Rumpfsektionen verwirklicht, so dass die Anzahl der zusammen zu fügenden Bauteile bei der Schaffung eines Querstoßes zwischen zwei Rumpfsektionen und gleichermaßen der Montageaufwand verringert werden.

### Bezugszeichenliste

| | | | |
|---|---|---|---|
| 1 | Kupplungselement | | |
| 2 | Fußflansch | | |
| 3 | Spantflansch | | |
| 4 | Winkel (Spantflansch/Flächenelement) | | |
| 5 | Flächenelement (dreieckförmig) | | |
| 6 | Winkel (Fußflansch/Flächenelement) | | |
| 7 | Längsseit | 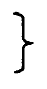 | Fußflansch |
| 8 | Längsseite | | |
| 9 | Aufkantung | | |
| 10 | Schrägkante | | |
| 11 | Hinterkante | | |
| 12 | Kantlinie | | |
| 13 | Mittellinie | | |
| 14 | Bohrung | | |
| 15 | Kupplungselement | | |
| 16 | Fußflansch | | |
| 17 | Spantflansch | | |
| 18 | Winkel | | |
| 19 | Flächenelement | | |
| 20 | Winkel | | |
| 21 | Längsseite | 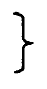 | Fußflansch |
| 22 | Längsseite | | |
| 23 | Aufkantung | | |
| 24 | Schrägkante | | |
| 25 | Hinterkante | | |
| 26 | Kantlinie | | |
| 27 | Mittellinie | | |
| 28 | Bohrung | | |
| 29 | Verlängerungsflansch | | |
| 30 | Bohrung | | |
| 31 | Rumpfzellenstruktur | | |
| 32 | Rumpfsektion | | |
| 33 | Rumpfsektion | | |
| 34 | Quernaht | | |
| 35 | Rumpfzellenhaut | | |
| 36 | Rumpfzellenhaut | | |
| 37 | Querstoßlasche | | |
| 38 | Stringer (Längsversteifungselement) | | |
| 39 | Stringer (Längsversteifungselement) | | |
| 40 | Klampe | | |
| 41 | Ringspant | | |
| 42 | Nietelement | | |
| 43 | Steg (Stringer) | | |
| 44 | linker Fußflansch (Stringer) | | |
| 45 | rechter Fußflansch (Stringer) | | |
| 46 | Fußflansch (Kupplungselement) | | |
| 47 | Kupplungselement | | |
| 48 | Spantflansch (Kupplungselement) | | |
| 49 | Flächenelement | | |
| 50 | Pfeil | | |
| 51 | Nietelement | | |
| 52 | Kupplungselement (bandförmiges Flachmaterial) | | |
| 53 | Nietelement | | |

## Patentansprüche

1. Anordnung von zwei Rumpfzellenhäuten (35, 36) eines Flugzeugs und einer Verbindungsstruktur (1, 15, 47; 37, 40, 41) zur Verbindung der Rumpfzellenhäute (35, 36) unter Ausbildung einer Quernaht (34), die Verbindungsstruktur (1, 15, 47; 37, 40, 41) aufweisend:
■ eine Querstoßlasche (37), die auf den einander benachbarten Randbereichen der Rumpfzellenhäute (35, 36) zur Verbindung derselben entlang der Quernaht (34) aufliegt und diese miteinander verbindet,
■ ein in Richtung der Stoßverbindung verlaufender Ringspant (41) oder Ringspantsegment, der auf der Innenseite der Querstoßlasche (37) über eine Mehrzahl von Cleats (40) mit der Querstoßlasche (37) verbunden ist,
■ eine Mehrzahl von entlang zueinander verlaufenden und entlang der Stoßverbindung jeweils nebeneinander gelegenen Stringern (38, 39), die jeweils auf der Innenseite jeweils einer der Rumpfzellenhäute (35, 36) mit diesen verbunden sind,
■ ein Kupplungselement (1, 15, 47) mit einem Fußflansch (2), dessen entgegen gesetzt zueinander gelegenen Endabschnitte Abschnitte von jeweils einander zugewandten und mit jeweils einer Rumpfzellenhaut (35, 36) verbundenen Stringem (38, 39) verbinden, und mit einem Spantflansch (3), der mit dem Ringspant (41) verbunden ist, wobei sich der Fußflansch (2) des Kupplungselements (1, 15, 47) zwischen der Querstoßlasche (37) und dem Ringspant (41) oder dem Ringspantsegment und quer zu diesem erstreckt, so dass deren Endabschnitte zwei mit jeweils verschiedenen Rumpfzellenhäuten (35, 36) verbundenen Stringern (38, 39) verbinden.

2. Anordnung von zwei Rumpfzellenhäuten (35, 36) und einer Verbindungsstruktur (1, 15, 47; 37, 40, 41) nach Patentanspruch 1, **dadurch gekennzeichnet, dass** eine Längsseite (7, 8, 21, 22) des Fußflansches (2, 16, 46) des Kupplungselements (1, 15, 47) in ein dreieckförmiges und senkrecht stehendes Flächenelement (5, 19, 49) übergeht, an das unter einem Winkel von etwa 90° der Spantflansch (3, 17, 48) anschließt.

3. Anordnung von zwei Rumpfzellenhäuten (35, 36) und einer Verbindungsstruktur (1, 15, 47; 37, 40, 41) nach Patentanspruch 2, **dadurch gekennzeichnet, dass** im Wesentlichen mittig auf dem Fußflansch (2, 19, 46) ein Flächenelement (5, 19, 49) positioniert ist, an das unter einem Winkel von etwa 90° der Spantflansch (3, 17, 48) anschließt.

4. Anordnung von zwei Rumpfzellenhäuten (35, 36) und einer Verbindungsstruktur (1, 15, 47; 37, 40, 41) nach einem der Patentansprüche 1 bis 3, **dadurch gekennzeichnet, dass** das Kupplungselement (1, 15, 47) einstückig ausgebildet ist.

5. Anordnung von zwei Rumpfzellenhäuten (35, 36) und einer Verbindungsstruktur (1, 15, 47; 37, 40, 41) nach einem der Patentansprüche 1 bis 4, **dadurch gekennzeichnet, dass** die Stringer (38, 39) im Bereich der Quernaht (34) jeweils gegenüberliegend angeordnet sind.

6. Anordnung von zwei Rumpfzellenhäuten (35, 36) und einer Verbindungsstruktur (1, 15, 47; 37, 40, 41) nach einem der Patentansprüche 1 bis 5, **dadurch gekennzeichnet, dass** das Kupplungselement (1, 15, 47) mit einer Vielzahl von Bohrungen (14, 28, 30) zur Einbringung von Verbindungselementen, insbesondere von Nietelementen (42, 51, 53), zur Anbindung der Längsversteifungselemente, insbesondere der Stringer (38, 39), und des Ringspants (41) versehen ist.

7. Anordnung von zwei Rumpfzellenhäuten (35, 36) und einer Verbindungsstruktur (1, 15, 47; 37, 40, 41) nach einem der Patentansprüche 1 bis 6, **dadurch gekennzeichnet, dass** an das Flächenelement (19) ein Verlängerungsflansch (29), insbesondere zur seitlichen, insbesondere flankenseitigen, Anbindung von Stringem (38,39) mit einer T-förmigen oder Z-förmigen Querschnittsgeometrie anschließt, der im Wesentlichen senkrecht auf dem Fußflansch (16) steht.

8. Anordnung von zwei Rumpfzellenhäuten (35, 36) und einer Verbindungsstruktur (1, 15, 47; 37, 40, 41) nach einem der Patentansprüche 1 bis 7, **dadurch gekennzeichnet, dass** das Kupplungselement (1, 15, 47) mit einem faserverstärkten Kunststoffmaterial und/oder mit einer Metalllegierung gebildet ist.

9. Anordnung von zwei Rumpfzellenhäuten (35, 36) und einer Verbindungsstruktur (1, 15, 47; 37, 40, 41) nach Patentanspruch 8, **dadurch gekennzeichnet, dass** die Metalllegierung eine Aluminiumlegierung, eine Titanlegierung, eine Edelstahllegierung oder eine Kombination hiervon ist.

10. Anordnung von zwei Rumpfzellenhäuten (35, 36) und einer Verbindungsstruktur (1, 15, 47; 37, 40, 41) nach Patentanspruch 8, **dadurch gekennzeichnet, dass** das Kupplungselement (1, 15, 47) mit Glare® gebildet ist.

11. Anordnung von zwei Rumpfzellenhäuten (35, 36) und einer Verbindungsstruktur (1, 15, 47; 37, 40, 41) nach einem der voranstehenden Patentansprüche, **dadurch gekennzeichnet, dass** die Stringer (38, 39) eine T-förmige, Z-förmige oder Ω-förmige Querschnittsgeometrie haben.

## Claims

1. An arrangement of two fuselage cell skins (35, 36) of an aeroplane and a connecting structure (1, 15, 47; 37, 40, 41) for purposes of connecting the fuselage cell skins (35, 36) with the formation of a transverse seam (34), the connecting structure (1, 15, 47; 37, 40, 41) having:
■ a transverse splicing plate (37), which abuts onto the edge regions of the fuselage cell skins (35, 36) adjacent to one another for purposes of connecting the same along the transverse seam (34), and connects these with one another,
■ an annular frame (41), or an annular frame segment, running in the direction of the butt joint, which is connected with the transverse splicing plate (37) via a multiplicity of cleats (40) on the inner face of the transverse splicing plate (37),
■ a multiplicity of stringers (38, 39), running alongside one another and in each case located adjacent to one another along the butt joint, each of which stringers is connected in each case on the inner face of one of the fuselage cell skins (35, 36) with the latter,
■ a coupling element (1, 15, 47), with a base flange (2), whose end sections, located opposed to one another, connect sections of stringers (38, 39) in each case facing one another and connected in each case with a fuselage cell skin (35, 36), and with a frame flange (3), which is connected with the annular frame (41), wherein the base flange (2) of the coupling element (1, 15, 47) extends between the transverse splicing plate (37) and the fuselage frame (41), or the fuselage frame segment, and transverse to the latter, so that its end sections connect two stringers (38, 39) connected in each case with different fuselage cell skins (35, 36).

2. The arrangement of two fuselage cell skins (35, 36) and a connecting structure (1, 15, 47; 37, 40, 41) in accordance with Claim 1, **characterised in that** a longitudinal side (7, 8, 21, 22) of the base flange (2, 16, 46) of the coupling element (1, 15, 47) translates into a triangular-shaped and upright standing surface element (5, 19, 49), to which the frame flange (3, 17, 48) connects at an angle of approximately 90°.

3. The arrangement of two fuselage cell skins (35, 36) and a connecting structure (1, 15, 47; 37, 40, 41) in accordance with Claim 2, **characterised in that** a surface element (5, 19, 49) is positioned essentially centrally on the base flange (2, 16, 46), to which surface element the frame flange (3, 17, 48) connects at an angle of approximately 90°.

4. The arrangement of two fuselage cell skins (35, 36) and a connecting structure (1, 15, 47; 37, 40, 41) in accordance with one of the Claims 1 to 3, **characterised in that** the coupling element (1, 15, 47) is of integral design.

5. The arrangement of two fuselage cell skins (35, 36) and a connecting structure (1, 15, 47; 37, 40, 41) in accordance with one of the Claims 1 to 4, **characterised in that** the stringers (38, 39) are in each case arranged in the region of the transverse seam (34) in an opposed manner.

6. The arrangement of two fuselage cell skins (35, 36) and a connecting structure (1, 15, 47; 37, 40, 41) in accordance with one of the Claims 1 to 5, **characterised in that** the coupling element (1, 15, 47) is provided with a multiplicity of holes (14, 28, 30) for purposes of introducing connecting elements, in particular rivet elements (42, 51, 53), for purposes of connecting together the longitudinal stiffening elements, in particular the stringers (38, 39), and the annular frame (41).

7. The arrangement of two fuselage cell skins (35, 36) and a connecting structure (1, 15, 47; 37, 40, 41) in accordance with one of the Claims 1 to 6, **characterised in that** an extension flange (29), in particular for purposes of sidewise connection, in particular on the side flanks, of stringers (38, 39) with a T-shaped or Z-shaped cross-sectional geometry, connects on to the surface element (19), which stands essentially upright on the base flange (16).

8. The arrangement of two fuselage cell skins (35, 36) and a connecting structure (1, 15, 47; 37, 40, 41) in accordance with one of the Claims 1 to 7, **characterised in that** the coupling element (1, 15, 47) is formed with a fibre-reinforced plastic material and/or with a metal alloy.

9. The arrangement of two fuselage cell skins (35, 36) and a connecting structure (1, 15, 47; 37, 40, 41) in accordance with Claim 8, **characterised in that** the metal alloy is an aluminium alloy, a titanium alloy, a stainless steel alloy, or a combination of these.

10. The arrangement of two fuselage cell skins (35, 36) and a connecting structure (1, 15, 47; 37, 40, 41) in accordance with Claim 8, **characterised in that** the coupling element (1, 15, 47) is formed with Glare®.

11. The arrangement of two fuselage cell skins (35, 36) and a connecting structure (1, 15, 47; 37, 40, 41) in accordance with one of the preceding claims, **characterised in that** the stringers (38, 39) have a T-shaped, Z-shaped, or Ω-shaped cross-sectional geometry.

## Revendications

1. Agencement de deux enveloppes de cellule de fuselage (35, 36) d'un avion et d'une structure de liaison (1, 15, 47; 37, 40, 41) pour relier les enveloppes de cellule de fuselage (35, 36) en formant un joint transversal (34), la structure de liaison (1, 15, 47; 37, 40, 41) présentant :
■ un couvre-joint transversal (37) qui repose sur les zones de bord adjacentes les unes aux autres des enveloppes de cellule de fuselage (35, 36) pour relier celles-ci le long du joint transversal (34) et les relie l'une à l'autre,
■ un couple annulaire (41) ou segment de couple annulaire s'étendant en direction du joint transversal, qui est relié au couvre-joint transversal (37) sur le côté intérieur du couvre-joint transversal (37) par une pluralité de fixations (40),
■ une pluralité de lisses (38, 39) s'étendant le long de l'une à l'autre et placées respectivement l'une à côté de l'autre le long du joint transversal, qui sont reliées chacune aux enveloppes de cellule de fuselage (35, 36) sur le côté intérieur de l'une de ces dernières respectivement,
■ un élément d'accouplement (1, 15, 47) comprenant une bride de socle (2) dont les tronçons d'extrémité placés de manière opposée l'un à l'autre relient des tronçons de lisses (38, 39) tournées respectivement l'une vers l'autre et reliées chacune à une enveloppe de cellule de fuselage (35, 36), et comprenant une bride de couple (3) reliée au couple annulaire (41), sachant que la bride de socle (2) de l'élément d'accouplement (1, 15, 47) s'étend entre le couvre-joint transversal (37) et le couple annulaire (41) ou le segment de couple annulaire ou transversalement à celui-ci, de façon à ce que leurs sections d'extrémité relient deux lisses (38, 39) reliées respectivement aux différentes enveloppes de cellule de fuselage (35, 36).

2. Agencement de deux enveloppes de cellule de fuselage (35, 36) et d'une structure de liaison (1, 15, 47; 37, 40, 41) selon la revendication 1, **caractérisé en ce qu'**un côté longitudinal (7, 8, 21, 22) de la bride de socle (2, 16, 46) de l'élément d'accouplement (1, 15, 47) se transforme en un élément plan (5, 19, 49) triangulaire et vertical, sur lequel la bride de couple (3, 17, 48) se raccorde dans un angle de sensiblement 90°.

3. Agencement de deux enveloppes de cellule de fuselage (35, 36) et d'une structure de liaison (1, 15, 47; 37, 40, 41) selon la revendication 2, **caractérisé en ce qu'**essentiellement au centre sur la bride de socle (2, 19, 46), un élément plan (5, 19, 49) est positionné, sur lequel la bride de couple (3, 17, 48) se raccorde dans un angle de sensiblement 90°.

4. Agencement de deux enveloppes de cellule de fuselage (35, 36) et d'une structure de liaison (1, 15, 47; 37, 40, 41) selon l'une des revendications 1 à 3, **caractérisé en ce que** l'élément d'accouplement (1, 15, 47) est monobloc.

5. Agencement de deux enveloppes de cellule de fuselage (35, 36) et d'une structure de liaison (1, 15, 47; 37, 40, 41) selon l'une des revendications 1 à 4, **caractérisé en ce que** les lisses (38, 39) sont disposées de manière respectivement opposée dans la zone du joint transversal (34).

6. Agencement de deux enveloppes de cellule de fuselage (35, 36) et d'une structure de liaison (1, 15, 47; 37, 40, 41) selon l'une des revendications 1 à 5, **caractérisé en ce que** l'élément d'accouplement (1, 15, 47) est muni d'une pluralité d'alésages (14, 28, 30) pour intégrer des éléments de liaison, en particulier des éléments de rivet (42, 51, 53), pour fixer les éléments de renfort longitudinaux, en particulier les lisses (38, 39), et le couple annulaire (41).

7. Agencement de deux enveloppes de cellule de fuselage (35, 36) et d'une structure de liaison (1, 15, 47; 37, 40, 41) selon l'une des revendications 1 à 6, **caractérisé en ce qu'**une bride de prolongation (29) se raccorde sur l'élément plan (19), en particulier pour la fixation latérale, en particulier côté flanc, de lisses (38,39) avec une géométrie de section transversale en T ou en Z, laquelle est essentiellement verticale sur la bride de socle (16).

8. Agencement de deux enveloppes de cellule de fuselage (35, 36) et d'une structure de liaison (1, 15, 47; 37, 40, 41) selon l'une des revendications 1 à 7, **caractérisé en ce que** l'élément d'accouplement (1, 15, 47) est formé avec un matériau plastique renforcé de fibres et/ou avec un alliage métallique.

9. Agencement de deux enveloppes de cellule de fuselage (35, 36) et d'une structure de liaison (1, 15, 47; 37, 40, 41) selon la revendication 8, **caractérisé en ce que** l'alliage métallique est un alliage d'aluminium, un alliage de titane, un alliage d'acier inoxydable ou une combinaison de ceux-ci.

10. Agencement de deux enveloppes de cellule de fuselage (35, 36) et d'une structure de liaison (1, 15, 47; 37, 40, 41) selon la revendication 8, **caractérisé en ce que** l'élément d'accouplement (1, 15, 47) est formé avec du Glare®.

11. Agencement de deux enveloppes de cellule de fuselage (35, 36) et d'une structure de liaison (1, 15, 47; 37, 40, 41) selon l'une des revendications précédentes, **caractérisé en ce que** les lisses (38, 39) ont une géométrie de section transversale en T, en Z ou en Ω.
